# EUROPEAN PATENT APPLICATION

(11) **EP 2 014 630 A2**
(43) Date of publication of application: **14.01.2009**
(21) Application number: 08000971.5
(22) Date of filing: 18.01.2008
(51) Int. Cl.: C04B 41/87, C04B 38/00, F27D 5/00

(54) **Firing jig and method for manufacturing honeycomb structured body**

(30) Priority: 06.06.2007 WO PCT/JP2007/061480
(71) Applicant: IBIDEN CO., LTD., Ogaki-shi Gifu 503-8604 (JP)
(72) Inventor: Saijo, Takamitsu, 2326 Hungary (HU)
(74) Representative: HOFFMANN EITLE

(57) **Abstract**

An object of the present invention is to provide a firing jig which is capable of preventing peelings in the case of repeatedly being used for firing a honeycomb molded body while formation of a sintered body sufficiently proceeds, and is capable of being used for a long time to cut down running costs; and the firing jig of the present invention comprises: a housing body for placing a pillar-shaped honeycomb molded body including silicon carbide as a main component with a side face of the honeycomb molded body facing down; and a coat layer formed on at least a placing face of the housing body for placing the honeycomb molded body thereon, wherein a main component of the coat layer is silicon carbide, the coat layer having an arithmetic average height Ra of 10 µm or less obtained in conformity with JIS B 0601 (2001).

## Description

### TECHNICAL FIELD

The present invention relates to a firing jig and a method for manufacturing a honeycomb structured body.

### BACKGROUND ART

Recently, particulates contained in exhaust gases discharged from internal combustions of vehicles such as bases and trucks, construction machines, and the like have become problems as contaminants harmful to the environment and the human body.
For this reason, there have been proposed various ceramic filters which can capture the particulates in the exhaust gases by allowing the exhaust gases to pass through porous ceramics to purify the exhaust gases.

In ceramic filters, for example, a plurality of honeycomb fired bodies, which are porous ceramic bodies, are bonded together by interposing a sealing material layer, and a sealing material layer is formed therearound. Also, each of these honeycomb fired bodies has a large number of cells disposed in a longitudinal direction, and a cell wall partitioning these cells is allowed to function as a filter.

As a common procedure to manufacture a honeycomb fired body of this kind, a silicon carbide powder, a binder, and a dispersant solution are mixed to prepare a mixture for manufacturing a molded body, and then the mixture is extrusion-molded to manufacture a honeycomb molded body.

Next, the obtained honeycomb molded body is dried by using a hot-air drying apparatus and the like to manufacture a dried honeycomb molded body which has a certain strength and is easy to handle.

After the drying, a degreasing treatment is carried out by heating the dried honeycomb molded body at a temperature of 300 to 650°C under an oxygen-containing atmosphere so as to volatilize a solvent in the binder to decompose and remove a resin component. Next, a firing treatment is carried out by heating the honeycomb molded body at a temperature of 2000 to 2200°C under an inert-gas atmosphere so as to sinter silicon carbide particles in the molded body to manufacture a honeycomb fired body which is a sintered body.

In the firing treatment of the honeycomb molded body, sintering of the silicon carbide particles proceeds as a reaction shown in the following chemical reaction equation (1) proceeds to the right side.

[Chem. 1] SiO+2C⇆SiC+CO (1)

Here, SiO in the chemical reaction equation (1) plays an important role in the sintering of the silicon carbide particles. A firing jig in which a coat layer is formed on at least one part of the surface of the firing jig is disclosed as a firing jig capable of supplying SiO required upon sintering the silicon carbide particles (see Patent Document 1) . A sufficient amount of SiO required for proceeding the reaction shown in the chemical reaction equation (1) can be supplied by using this firing jig; therefore formation of a sintered body can be surely proceeded.

Patent Document 1: WO2007/015 A1

### DISCLOSURE OF THE INVENTION PROBLEMS TO BE SOLVED BY THE INVENTION

However, in the case of using the firing jig of Patent Document 1, although the sintering of the silicon carbide particles proceeds, there have been some cases that peeling of a coat layer occurs on a placing face for the honeycomb molded body as repeating the firing treatment. Then, in the case that the peeling occurs, the firing jig can no more be used as a firing jig, so that it is required to exchange to another firing jig, and this causes increase of running costs.

The present invention is devised in view of the above-mentioned points, and an object of the present invention is to provide a firing jig, which can sufficiently proceed a series of formation reaction of a sintered body, prevent peeling of a coat layer even if used repeatedly for firing a honeycomb molded body, and can be used for a long time to cut down running costs.

### MEANS FOR SOLVING THE PROBLEMS

In order to achieve the above-mentioned object, a firing jig according to claim 1 comprises: a housing body for placing a honeycomb molded body including silicon carbide as a main component with a side face of the honeycomb molded body facing down; and a coat layer formed on at least a placing face of the housing body for placing the honeycomb molded body thereon, wherein a main component of the coat layer is silicon carbide and the coat layer has an arithmetic average height Ra of 10 µm or less.

In the firing jig according to claim 1, since the coat layer formed on the placing face of the housing body has an arithmetic average height Ra of 10 µm or less (hereinafter, also simply referred to as a surface roughness) obtained in conformity with JIS B 0601 (2001), generation of local stress due to irregularities on the surface is inhibited even if the firing jig is exposed to high temperatures for firing the honeycomb molded body. Consequently, occurrence of fine cracks, fractures and the like due to the local stress is inhibited on the coat layer, so that peeling of the coat layer does not occur even if the firing jig of the present invention is used for a long time. Thus, since it is not required to frequently exchange the firing jigs, running costs can be cut down for a long time. Furthermore, since the firing jig according to claim 1 can be used stably for a long time, it is possible to prevent firing conditions from being unstable due to frequent exchanges of the firing jigs.

In the firing jig according to claim 1, since the surface roughness of the coat layer is 10 µm or less, even in the case that a honeycomb molded body is placed in the firing jig, irregularities are not formed on the surface of the honeycomb molded body. Particularly, since a honeycomb fired body used for a ceramic filter has had a thinner wall than the conventional honeycomb fired bodies, the surface of the honeycomb molded body tends to be influenced by the irregularities on the surface of the firing jig. However, in the firing jig according to claim 1, since the surface roughness of the coat layer is 10 µm or less and the surface of the honeycomb molded body tends not to be influenced by the irregularities on the surface of the firing jig, a favorable surface condition can be obtained on the honeycomb fired body after the firing treatment.

In the firing jig according to claim 1, since the main component of the coat layer includes silicon carbide, sufficient SiO can be supplied to a system where the firing is carried out according to the following chemical reaction equation (2). Thus, sintering of the silicon carbide particles can sufficiently proceed and a honeycomb fired body having predetermined qualities can be manufactured.

[Chem. 2] SiC+CO ⇄ SiO+2C (2)

Here, CO in the chemical reaction equation (2) presumably generates in a reaction according to the following chemical reaction equation (3) and the like at a stage in which a firing temperature is low (about 1200°C or less). Also, a supply source of SiO₂ in the chemical reaction equation (3) is impurities and the like contained in a raw material composition which includes silicon carbide as a main component.

[Chem. 3] SiO₂+ C ⇄ SiO+CO (3)

It is possible to increase strength of the coat layer by forming a dense coat layer by a vapor-phase method as in the firing jig according to claim 2. By extension, it is possible to increase the durability as a firing jig.
On the other hand, in a conventional practice, since an operation in which the housing body is allowed to pass through a firing furnace controlled to have high temperatures in a state that a honeycomb molded body is not placed until silicon carbide remaining in the firing furnace deposits on the placing face of the housing body (that is, no-load heating) is repeatedly carried out so as to form a coat layer, it have taken much time and high costs to manufacture a firing jig. Here, by forming the coat layer by the vapor-phase method as in the firing jig according to claim 3, it is possible to form the dense coat layer uniformly through a single operation, and simultaneously possible to cut the time and costs. In the case that the coat layer is formed by the no-load heating, quite a long time is required to make firing conditions stable; however, it is possible to greatly cut the time for making the firing conditions stable by forming the coat layer through the single operation by use of the vapor-phase method.

As in the firing jig according to claim 3, since it is possible to form the coat layer having high purity of SiC by using a chemical vapor infiltration method as the vapor-phase method, reactions that are not required for the formation of the sintered body due to the impurities can be prevented as much as possible.

By forming the dense coat layer on the entire surface of the housing body as in the firing jig according to claim 4, the constituent materials of the housing body tend not to leak from the coat layer into the system in which the firing treatment is carried out. Thus, it is possible to prevent occurrence of the reactions that are not required for the sintering of the silicon carbide particles due to the constituent materials of the housing body leaked from the coat layer.
Also, since the constituent materials of the housing body have almost no influence on the sintering, more various kinds of materials can be used as the material forming the housing body.

As in the firing jig according to claim 5, the coat layer may be formed by grinding a SiC coat layer comprising a forming material of the SiC coat layer. Since the SiC coat layer formed by grinding is to be a dense layer having a surface roughness of a predetermined value, it is possible to prevent peelings, cracks, and irregularities from occurring in the coat layer.

In the firing jig according to claim 6, the forming material of the SiC coat layer is desirably a polymer mainly containing hydridopolycarbosilane, a mixture containing SiC particles and SiO₂ particles, a material containing SiC particles with SiO₂ film formed on a surface of the particles, or a mixture containing Si and C.

In the firing jig according to claim 6, the polymer mainly containing hydridopolycarbosilane, the mixture containing SiC particles and SiO₂ particles, the material containing SiC particles with SiO₂ film formed on a surface of the particles, or the mixture containing Si and C may be used as the forming material of the SiC coat layer. In the case of using the material of this kind, the SiC coat layer is to be coarsely formed in the vicinity of the surface, and densely formed inside. Since the coarsely-formed surface portion is ground so as to allow the densely-formed portion to emerge on the surface of the SiC coat layer of this kind, it is possible to prevent peelings, cracks, and the like from occurring after grinding.

As in the firing jig according to claim 7, the coat layer may comprise a recrystallized SiC or a reaction-sintered SiC.

A method for manufacturing a honeycomb structured body formed by a honeycomb fired body according to claim 8 comprises: molding a ceramic material including silicon carbide as a main component to manufacture a pillar-shaped honeycomb molded body having a large number of cells disposed in a longitudinal direction with a cell wall therebetween; degreasing the honeycomb molded body; and firing the degreased honeycomb molded body to manufacture the honeycomb fired body, wherein the honeycomb molded body is fired in a state that the honeycomb molded body is placed in a firing jig, the firing jig comprising: a housing body for placing the honeycomb molded body with a side face of the honeycomb molded body facing down; and a coat layer formed on at least a placing face of the housing body for placing the honeycomb molded body, and a main component of the coat layer is silicon carbide, the coat layer having an arithmetic average height Ra of 10 µm or less obtained in conformity with JIS B 0601 (2001).

In the method for manufacturing a honeycomb structured body according to claim 8, since the main component of the coat layer formed on the placing face of the firing jig is silicon carbide, it is possible to supply sufficient SiO required for the sintering of the silicon carbide particles in the reaction shown in the chemical reaction equation (1) ; thus a sufficiently sintered honeycomb fired body can be manufactured. Also, since a honeycomb structured body is manufactured by using the sufficiently sintered honeycomb fired body, it is possible to manufacture a honeycomb structured body having excellent qualities such as low pressure loss and high bending strength.
In addition, in the method for manufacturing a honeycomb structured body according to claim 8, since the surface roughness of the coat layer is 10 µm or less, irregularities due to the irregularities of the coat layer hardly occur on the surface of the honeycomb fired body even if the honeycomb molded body is fired while being placed in the firing jig. Therefore, in the honeycomb structured body using the obtained honeycomb fired body, since cell cracks, decrease of strength, and the like due to such fine irregularities do not occur, it is possible to prevent the loss of the product (low production yield) from occurring and to keep the qualities of the product for a long time.

Moreover, in the method for manufacturing a honeycomb structured body according to claim 8, since the surface roughness of the coat layer is 10 µm or less, stress due to fine irregularities tends not to be generated. Therefore, since cracks or fractures tend not to occur on the surface of the coat layer, it is possible to stably use the firing jig for a long time. Also, since it is possible to use the firing jig for a long time, the running costs for firing can be cut down.

In the method for manufacturing a honeycomb structured body according to claim 9, since a dense coat layer is formed by a vapor-phase method, it is possible to increase strength of the coat layer, and by extension to increase durability as a firing jig.
Also, since such a coat layer can be formed on the housing body through a single operation, it is possible to shorten a time period for stabilization of the coat layer, and thus the firing conditions can be stabilized quickly. Therefore, it is possible to shorten the time period for manufacturing a honeycomb structured body including preparation.

In the method for manufacturing a honeycomb structured body according to claim 10, since a chemical vapor infiltration method is employed as the vapor-phase method, a coat layer having high purity of SiC can be formed. Thus, reactions that are not required for the formation of the sintered body due to the impurities and the like can be prevented as much as possible, and a honeycomb structured body having high qualities can be manufactured.

The constituent materials of the housing body tend not to leak from the coat layer by forming the dense coat layer on the entire surface of the housing body as in the method for manufacturing a honeycomb structured body according to claim 11. Thus, it is possible to prevent the leaked constituent materials of the housing body from badly influencing on the sintering reaction of the silicon carbide particles.
Also, since the constituent materials of the housing body hardly have an influence on the sintering, more various kinds of materials can be used as the material forming the housing body.

In the method for manufacturing a honeycomb structured body according to claim 12, since the honeycomb molded body is placed in the firing jig by interposing a spacer comprising carbon, it is possible to sufficiently supply C in the reactions shown in the chemical reaction equations (1) and (3), and to sufficiently proceed the formation of the sintered body.
Here, residual portion of organic content included in the raw material composition after degreasing is a supply source of C in the reactions shown in the chemical reaction equations (1) and (3), but since an amount of the residual content is very small, the residual content finally runs out as the formation of the sintered body proceeds. Even in such a case, by using the spacer comprising carbon, the reactions shown in the chemical reaction equations (1) and (3) proceed by using this carbon as the supply source, so that it is possible to proceed the sintering of the silicon carbide particles.

The method for manufacturing a honeycomb structured body according to claim 13 comprises degreasing the honeycomb molded body by use of the predetermined firing jig, while the honeycomb molded body is placed in the firing jig; and firing the honeycomb molded body, while the degreased honeycomb molded body is placed in the firing jig. Thus, it is not required to transport the honeycomb molded body to the firing jig after the degreasing of the honeycomb molded body. Here, since the degreased honeycomb molded body has a low water content and is not sintered, the degreased honeycomb molded body is fragile and hard to handle; however, since the honeycomb molded body can be fired without being transported after the degreasing, it is possible to prevent damages of the honeycomb molded body due to the transportation to the firing jig.

Moreover, since space is formed between the honeycomb molded body and the placing face of the housing body by placing the honeycomb molded body in the housing body by interposing the spacer, it is possible to make an atmosphere around the honeycomb molded body more uniform. Thus, it is possible to prevent variations in the state of proceeding of the degreasing depending on the part of the honeycomb molded body from occurring.
Moreover, since the honeycomb molded body is allowed not to contact the firing jig by using the spacer upon being placed, it is possible to prevent problems such as insufficient strength due to uneven firing of the cell wall forming the side face of the honeycomb molded body, recesses, breakages of the cell wall, and cracks due to a contact with the firing jig, and the like. Also in the case of using the spacer in place of placing the honeycomb molded body directly, it is possible to alternatively obtain the effect of suppressing the influence of the irregularities on the surface of the coat layer of the firing jig.

In the method for manufacturing a honeycomb structured body according to claim 14, the coat layer is desirably formed by grinding a SiC coat layer comprising a forming material of the SiC coat layer.

As in the method for manufacturing a honeycomb structured body according to claim 14, a dense layer having a surface roughness of a predetermined value is to be obtained even in the case of forming the coat layer by grinding the SiC coat layer comprising the forming material of the SiC coat layer.
Therefore, since it is possible to prevent peelings, cracks, and irregularities from occurring, irregularities or the like tend not to occur on the surface of a honeycomb fired body to be obtained. By extension, it is possible to manufacture a honeycomb structured body having a predetermined quality.

In the method for manufacturing a honeycomb structured body according to claim 15, the forming material of the SiC coat layer is desirably a polymer mainly containing hydridopolycarbosilane, a mixture containing SiC particles and SiO₂ particles, a material containing SiC particles with SiO₂ film formed on a surface of the particles, or a mixture containing Si and C.

In the method for manufacturing a honeycomb structured body according to claim 15, the polymer mainly containing hydridopolycarbosilane, the mixture containing SiC particles and SiO₂ particles, the material containing SiC particles with SiO₂ film formed on a surface of the particles, or the mixture containing Si and C may be used as the forming material of the SiC coat layer. In the case of using the material of this kind, the SiC coat layer is to be coarsely formed in the vicinity of the surface, and densely formed inside. Since the coarsely-formed surface portion of the SiC coat layer of this kind is ground so as to allow the densely-formed portion to emerge on the surface, it is possible to prevent peelings, cracks, and the like from occurring after grinding. Therefore, it is possible to manufacture a honeycomb fired body, by extension, a honeycomb structured body having a predetermined quality with no irregularities and the like on the surface.

In the method for manufacturing a honeycomb structured body according to claim 16, the coat layer desirably comprises a recrystallized SiC or a reaction-sintered SiC.

As in the method for manufacturing a honeycomb structured body according to claim 16, the coat layer may specifically comprise a recrystallized SiC or a reaction-sintered SiC.

### BEST MODE FOR CARRYING OUT THE INVENTION

### (First embodiment)

The following description will discuss a first embodiment, which is one embodiment of the present invention, referring to drawings.

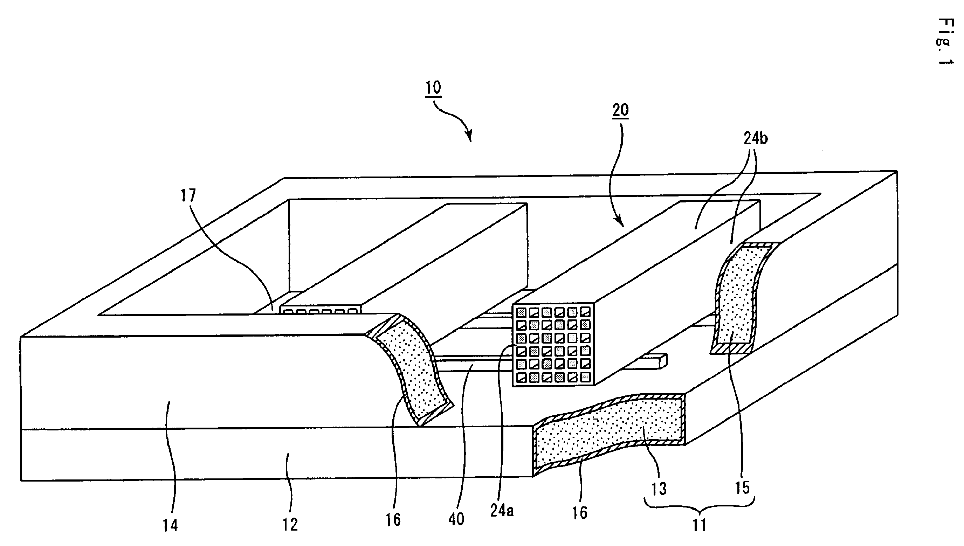

Fig. 1 is a partial cross-sectional perspective view schematically showing a firing jig of the first embodiment of the present invention.
A firing jig 10 comprises a bottom plate 12 and a frame material 14, and both of these are integrated by placing the frame material 14 on the bottom plate 12. The frame material 14 is fixed to the bottom plate 12 by fitting a projected portion formed on a lower face of the frame material 14 and a recessed portion formed on an upper face of the bottom plate 12 together.

The bottom plate 12 comprises a bottom base 13 comprising carbon and a coat layer 16 formed on the surface of the bottom base 13, and the frame material 14 comprises a frame base 15 comprising carbon and a coat layer 16 formed on the surface of the frame base 15. In the firing jig 10 shown in Fig. 1, a housing body 11 is configured by the bottom base 13 and the frame base 15.
Alternatively, in the present embodiment, the bottom base 13 and the frame base 15 are integrated to configure the housing body 11, and the coat layer 16 may be formed on the housing body configured as an integral body.

The coat layer 16 is a dense layer including silicon carbide as a main component as described below, and is uniformly formed on the entire surface of the bottom base 13 and the frame base 15 configuring the housing body 11. Since the surface roughness of the coat layer 16 is 10 µm or less, the coat layer 16 has a favorable flatness. Also, the coat layer 16 may be formed only on the placing face of the bottom base 13 for a honeycomb molded body, or may be formed also on the surface of the frame base 15 opposing to a honeycomb molded body. The coat layer 16 may be formed on the entire surface of the bottom base 13 and the frame base 15.

The firing jig 10 has a box shape with its upper face open, and can house a predetermined number of honeycomb molded bodies 20. Upon placing the honeycomb molded body 20 onto the firing jig 10, the honeycomb molded body 20 is placed on the placing face 17 of the firing jig 10, with a side face 24b of the honeycomb molded body 20 facing down.

Moreover, upon firing, the honeycomb molded body 20 is placed on the placing face 17 by interposing a spacer 40 comprising carbon. In the firing jig 10 shown in Fig. 1, the honeycomb molded body 20 is placed on the placing face 17 by interposing two spacers 40. Here, even if the honeycomb molded body 20 is placed on the placing face 17 without using the spacer 40, since the surface roughness of the coat layer 16 is 10 µm or less, the surface (side face 24b) of the honeycomb molded body 20 tends not to be influenced by the irregularities on the placing face 17.

The coat layer 16 is a dense layer formed on the entire surface of the housing body 11 (bottom base 13 and frame base 15) by the chemical vapor infiltration method. By using the chemical vapor infiltration method, silicon carbide infiltrates into the surface of the housing body 11 comprising carbon to a very short depth, so that the coat layer 16 is formed as the dense layer having 70 to 120 µm of thickness. The coat layer 16 thus formed is also included in the coat layer of the present invention. In addition to the above-mentioned method, the coat layer may be formed in such a manner that silicon carbide is deposited on the surface of the housing body 11 by a chemical vapor deposition method. Since the dense coat layer 16 is formed on the entire surface of the housing body 11 by the chemical vapor infiltration method, peeling or crack on the surface tends not to occur on the firing jig 10 even if the firing jig 10 is exposed to high temperatures upon firing the honeycomb molded body 20, so that the firing jig 10 can be used stably over the long term.

The coat layer 16 functions as a supply source of SiO required for the sintering of the silicon carbide particles shown in the chemical reaction equation (2) as described above. Here, CO is generated as the sintering of the silicon carbide particles in the reaction shown in the chemical reaction equation (1) proceeds to the right side, and a partial pressure of CO in the firing furnace increases. The reaction shown in the chemical reaction equation (1) comes to proceed to the left side as the partial pressure of CO increases since the reaction shown in the chemical reaction equation (1) is an equilibrium reaction; therefore formation of SiC does not proceed, that is, the sintering of the silicon carbide particles comes to be inhibited. Even in such a case, since the coat layer 16 comprising silicon carbide allows the reaction shown in the chemical reaction equation (2) to proceed to the right side in the coat layer 16 to consume excess CO, the sintering favorably proceeds. As described above, the coat layer 16 functions as a SiO source required for the sintering, and simultaneously functions as a consumer of CO excessively generated by the proceeding of the sintering.

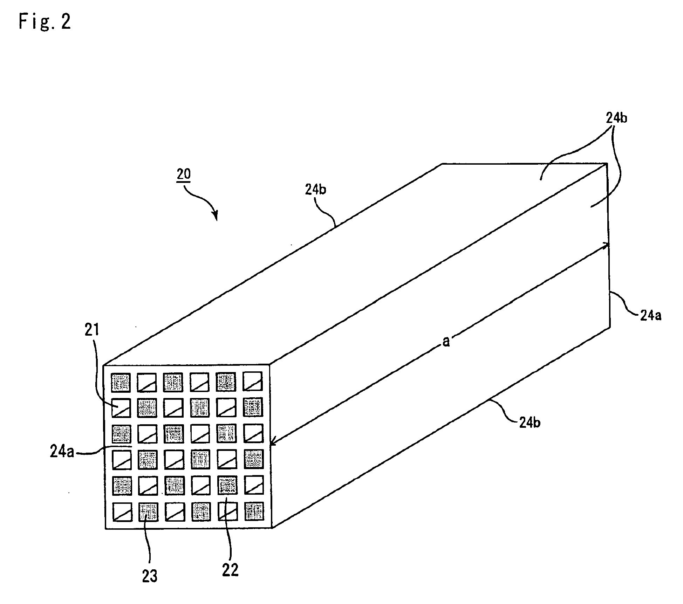

The honeycomb molded body 20 is a molded body obtained by extrusion-molding a raw material including silicon carbide as a main component, and generally, the degreasing treatment is carried out to remove the organic content and the like before the firing. In the honeycomb molded body 20, a large number of cells 21 are disposed in a longitudinal direction (the direction shown by an arrow a in Fig. 2) of the honeycomb molded body 20 with the cell wall 22 therebetween, as shown in Fig. 2. Moreover, each of the cells 21 is sealed with a plug material paste 23 at either one end; therefore a large number of the cells 21 are open in the checkered pattern at both end faces 24a. Here, in the present specification, the face in which the cells 21 are open is referred to as an end face 24a, and the face other than the end face is referred to as a side face 24b.

Next, the following description will discuss a method for manufacturing a honeycomb structured body of the present embodiment.
First, a honeycomb structured body obtained by the present manufacturing method will be briefly described, and then, the manufacturing method will be described.

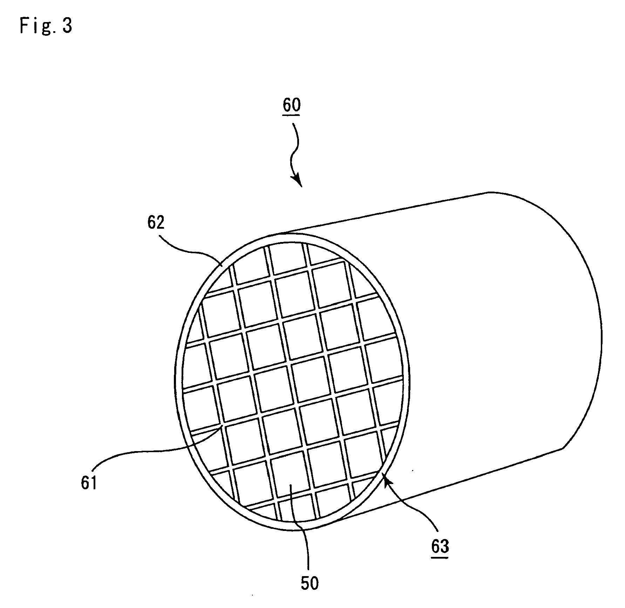

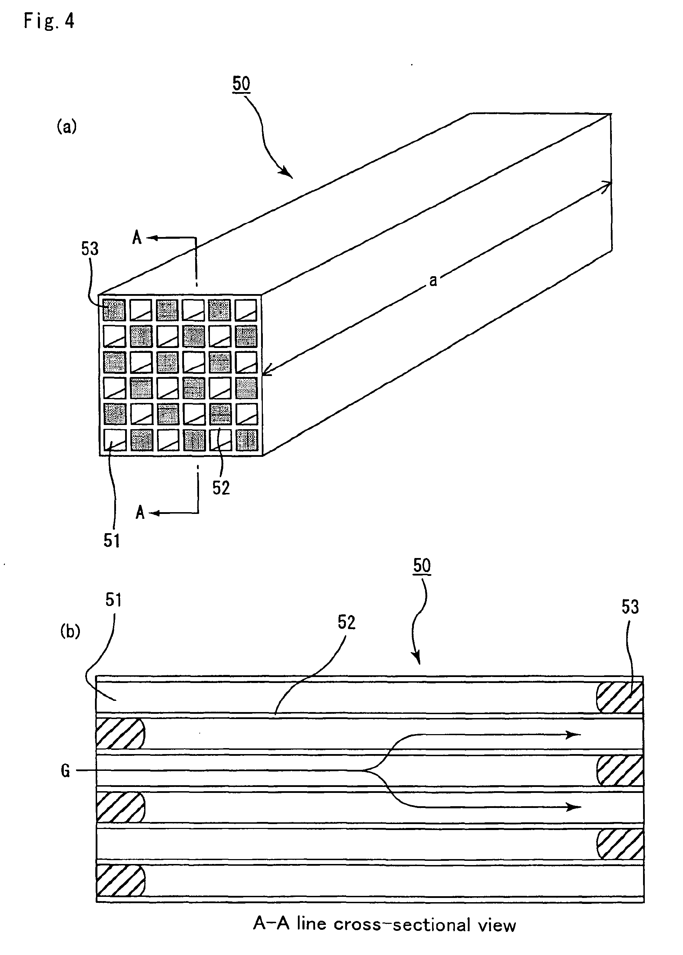

Fig. 3 is a perspective view schematically showing one example of a honeycomb structured body, Fig. 4(a) is a perspective view schematically showing a honeycomb fired body which forms the honeycomb structured body, and Fig. 4 (b) is an A-A line cross-sectional view of the honeycomb fired body.

In a honeycomb structured body 60, as shown in Fig. 3, a plurality of honeycomb fired bodies 50 are bonded together by interposing a sealing material layer (adhesive layer) 61 to form a ceramic block 63, and further a sealing material layer (coat layer) 62 is formed on the periphery of the ceramic block 63.
Moreover, the honeycomb fired body 50 has the same shape as that of the honeycomb molded body 20, and as shown in Fig. 4 (a), a large number of cells 51 are disposed in a longitudinal direction (the direction shown by an arrow a in Fig. 4(a)).

As shown in Fig. 4(b), each of the cells 51 disposed in the honeycomb fired body 50 is sealed with a plug 53 at either one end of a gas-inlet side or a gas-outlet side of exhaust gases G. The exhaust gases G flowing into one cell 51 is allowed to flow out from another cell 51 after passing through the cell wall 52 which partitions the cells 51, and upon passing through the cell wall 52, particulates of the exhaust gases G are captured at the cell wall 52; therefore the exhaust gases are purified. That is, the cell wall 52 which partitions the cells 51 is to function as a filter.

Next, the following description will discuss the method for manufacturing a honeycomb structured body of the present embodiment.
First, a powder mixture is prepared by dry-mixing silicon carbide powders each having a different average particle diameter as ceramic materials and an organic binder while a liquid mixture is prepared by mixing a liquid plasticizer, a lubricant, and water. Next, the powder mixture and the liquid mixture are mixed with a wet-mixing apparatus to prepare a wet mixture for manufacturing a molded body.

Next, the wet mixture is put into an extrusion-molding apparatus.
The wet mixture is put into the extrusion-molding apparatus and then extrusion-molded to form a honeycomb molded body having a predetermined shape. The honeycomb molded body is dried by a drying apparatus to obtain a dried honeycomb molded body.

Both ends of the dried honeycomb molded body are cut by a cutting apparatus to obtain a honeycomb molded body having a predetermined length. Next, a predetermined amount of the plug material paste is charged into either one end of the gas-inlet side or the gas-outlet side of each of the cells to seal the cells. Upon sealing the cell, a mask for sealing a cell is attached to the end face (that is, a cut face after both ends are cut) of the honeycomb molded body and the plug material paste is charged into only the cells which is required to be sealed. The cell-sealed honeycomb molded body is manufactured through these processes.

Next, the degreasing is carried out by heating the cell-sealed honeycomb molded body in a degreasing furnace.
The honeycomb molded body is degreased by heating at a temperature of 300 to 650°C under an oxygen-containing atmosphere after placing the honeycomb molded body in the firing jig and transporting to the degreasing furnace. The organic binder and the like are volatilized by the degreasing and almost only the silicon carbide powder is remained. In this case, in order to make the atmosphere around the honeycomb molded body uniform, the honeycomb molded body 20 is degreased in a state that the frame material 14 is detached from the bottom plate 12 of the firing jig 10 shown in Fig. 1 and the honeycomb molded body 20 is placed on the bottom plate 12 by interposing the spacer 40.

Thereafter, the degreased honeycomb molded body 20 is transported to the firing furnace while being placed on the bottom plate 12 and the honeycomb molded body 20 is fired. As shown in Fig. 1, the honeycomb molded body 20 is fired in a state that the frame material 14 is attached to the bottom plate 12 on which the degreased honeycomb molded body is placed. Since the honeycomb molded body 20 is fired while being placed on the bottom plate 12, it is not required to transport the honeycomb molded body from the jig used in the degreasing to the firing jig; therefore the damages to the honeycomb molded body 20 can be prevented.

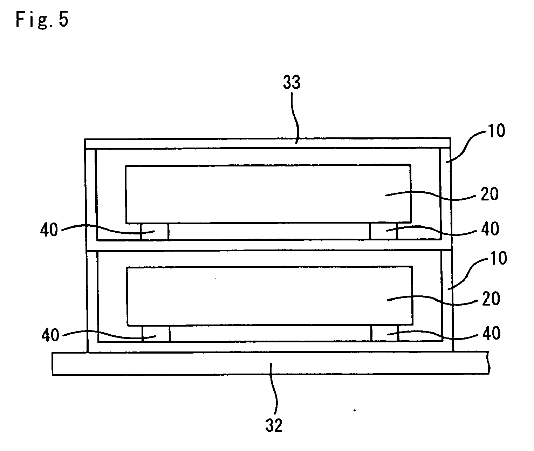

Next, as shown in Fig. 5, a plurality of firing jigs 10 housing the honeycomb molded body 20 therein are piled up, and a lid 33 is placed on the uppermost part. The honeycomb molded body 20 is continuously fired while the piled-up firing jigs 10 are placed on a transporting apparatus 32 and are transported in the firing furnace. The degreased honeycomb molded body 20 is fired at a temperature of 1400 to 2200°C under an inert gas atmosphere such as nitrogen, argon, and the like.

Then, a sealing material paste is applied to the side face of the obtained honeycomb fired body to form a sealing material paste layer, and another honeycomb fired body is successively piled up on the honeycomb fired body by interposing the sealing material paste layer. This operation is repeated to manufacture an aggregated body of honeycomb fired bodies with a predetermined number of honeycomb fired bodies bonded together. Here, a substance containing an inorganic binder, an organic binder, and at least one of inorganic fibers and inorganic particles can be used as the sealing material paste.

Next, the aggregated body of the honeycomb fired bodies is heated and the sealing material paste layer is dried and solidified to form a sealing material layer (adhesive layer). Thereafter, the aggregated body of the honeycomb fired bodies is cut by using a diamond cutter and the like to form a ceramic block, and then the sealing material paste is applied to a peripheral face of the ceramic block and is dried and solidified to form a sealing material layer (coat layer). Thus, a honeycomb filter is manufactured.

Hereinafter, actions and effects of the firing jig and the method for manufacturing a honeycomb structured body of the present embodiment will be listed.
(1) Since the surface roughness of the coat layer formed on the placing face of the housing body is 10 µm or less, the occurrence of the fine cracks, fractures, and the like due to the local stress is inhibited even if the firing jig is exposed to high temperatures for firing the honeycomb molded body and it is possible to prevent the peelings of the coat layer even in the case of using for a long time. Also, since it is not required to frequently exchange the firing jig, the running costs can be cut down over the long time. Furthermore, since the firing jig of the present embodiment can be stably used for a long time, it is possible to stabilize the firing conditions.

(2) Since the surface roughness of the coat layer is 10 µm or less, the surface of the honeycomb molded body is hardly influenced by the irregularities on the surface of the firing jig and the favorable surface condition can be obtained on the honeycomb fired body after the firing.

(3) Since the main component of the coat layer is silicon carbide, it is possible to sufficiently supply SiO required for the sintering. Thus, the sintering of the silicon carbide particles sufficiently proceeds and the honeycomb fired body having the predetermined quality can be manufactured.

(4) It is possible to increase the strength of the coat layer by forming the dense coat layer through the vapor-phase method, and by extension it is possible to increase the durability as the firing jig.
Also, it is possible to form the coat layer having the high purity of SiC by using the chemical vapor infiltration method, and the reactions that inhibit the formation of the sintered body due to the impurities can be prevented.

(5) It is possible to prevent the constituent materials of the housing body from leaking by forming the dense coat layer on the entire surface of the housing body and to prevent the reactions that are not required for the sintering from occurring.

(6) Since the main component of the coat layer formed on the firing jig is silicon carbide, it is possible to sufficiently supply SiO required for the sintering of the silicon carbide particles; therefore the sufficiently sintered honeycomb fired body can be manufactured. Also, since the honeycomb structured body is manufactured by using the sufficiently sintered honeycomb fired body, it is possible to manufacture the honeycomb structured body having the excellent qualities such as the low pressure loss and the high bending strength.

(7) Since the dense coat layer can be formed on the housing body through the single operation by the vapor-phase method, it is possible to shorten the time for stabilization of the coat layer, and thus the firing reaction can be stabilized quickly. Therefore, it is possible to shorten the time for manufacturing the honeycomb structured body including the preparation.

(8) The coat layer having the high purity of SiC can be formed by using the chemical vapor infiltration method as the vapor-phase method. Thus, the reactions that are not required for the formation of the sintered body due to the impurities can be prevented, and the honeycomb structured body having the high qualities can be manufactured.

(9) The honeycomb molded body is degreased by use of the predetermined firing jig while the honeycomb molded body is placed in the firing jig, and the honeycomb molded body is fired while the degreased honeycomb molded body is placed in the firing jig. Thus, it is not required to transport the honeycomb molded body to the firing jig after the degreasing of the honeycomb molded body. Also, it is possible to prevent the damages of the honeycomb molded body due to the transportation to the firing jig.

(10) Moreover, since the space is formed between the honeycomb molded body and the placing face of the housing body by placing the honeycomb molded body in the housing body by interposing the spacer, it is possible to make the atmosphere around the honeycomb molded body more uniform. Thus, it is possible to prevent the variations in the state of the proceedings of the degreasing depending on the part of the honeycomb molded body from occurring and to prevent variations in the strength.

The following description will show examples that disclose the first embodiment of the present invention more specifically; however the present invention is not limited to these examples.

### (Example 1)

Out of faces of a box-shaped housing body with its upper face open configured by a bottom base and a frame base comprising carbon (DSG-332, manufactured by SEC Corp.), a dense SiC coat layer comprising SiC was formed on a placing face of the bottom base for a honeycomb molded body and a surface of the frame base by a chemical vapor infiltration (CVI) method. The SiC coat layer was formed as follows: the bottom base was placed in a reactor; methyl trichlorosilane was prepared as a vapor-phase material; and SiC was deposited to be about 90 µm in thickness by allowing the vapor-phase material to flow into the reactor, which was controlled to be at a temperature of 1500°C under a reduced pressure. The deposition of SiC was carried out once.

### (Example 2)

A SiC-layer forming material was prepared by kneading 60 g of a silicon carbide powder, 3 g of tetrabutoxytitanium, 17 g of a silicon resin, and 20 g of xylene. Out of the surfaces of a box-shaped housing body with its upper face open configured by a bottom base and a frame base comprising carbon (DSG-332, manufactured by SEC Corp.) , the SiC coat-layer forming material was sprayed to a placing face of the bottom base for a honeycomb molded body and a surface of the frame base with a spray gun (spraying amount: 25 g), and then dried at a temperature of 80°C for 20 minutes and at a temperature of 230°C for 20 minutes by using a drying apparatus, so that a SiC coat layer was formed on a surface of a firing jig.

### (Comparative Example 1)

A bottom base and a frame base comprising carbon (DSG-332, manufactured by SEC Corp.) were allowed to pass through a firing furnace controlled to have the same conditions as those for firing a honeycomb molded body (at a temperature of 2200°C for three hours under a normal-pressure argon atmosphere) 10 times (what is called "no-load heating"), so that a SiC coat layer having a thickness of about 300 µm was formed on a placing face of the bottom base for a honeycomb molded body and on a surface of the frame base by SiC recrystallization.

### (Manufacture of honeycomb fired body)

Honeycomb fired bodies were manufactured by use of each of the firing jigs manufactured in Examples 1 and 2, and Comparative Example 1.
A raw honeycomb molded body having almost the same shape as that of the honeycomb molded body shown in Fig. 2, with its cells unsealed, was manufactured as follows: 52.8% by weight of a silicon carbide coarse powder having an average particle diameter of 22 µm and 22.6% by weight of a silicon carbide fine powder having an average particle diameter of 0.5 µm were wet-mixed; 2.1% by weight of an acrylic resin, 4.6% by weight of an organic binder (methyl cellulose), 2.8% by weight of a lubricant (UNILUB, manufactured by NOF Corp.), 1.3% by weight of glycerin, and 13.8% by weight of water were added to the obtained mixture and then kneaded; the obtained wet mixture was extrusion-molded to manufacture an extrusion-molded body; and the extrusion-molded body was cut.

Then, the honeycomb molded body was dried with a microwave drying apparatus and a plug material paste having the same composition as that of the raw molded body was filled into predetermined cells of the dried honeycomb molded body to seal the cells, and the honeycomb molded body was dried again with the drying apparatus.

Next, 10 pieces of the honeycomb molded bodies with the plug material paste filled into the cells were placed on a plate-like jig comprising carbon for degreasing (the bottom plate 12 shown in Fig. 1, that is, the firing jig in Examples 1 and 2, or in Comparative Examples 1) by interposing spacers comprising carbon, and each honeycomb molded body was degreased at a temperature of 400°C.

Then, the frame material 14 was attached to the bottom plate 12 to configure the firing jig 10 (refer to Fig. 1) while each honeycomb molded body was placed on the bottom plate 12, and the honeycomb molded body in such a state was fired at a temperature of 2200°C for three hours under a normal-pressure argon atmosphere to manufacture a honeycomb fired body comprising silicon carbide sintered body having 45% of porosity, 12 µm of an average pore diameter, 34.3 mm height x 34.3 mm width x 150 mm length of a dimension, 46.5 pcs/cm² of a cell number (cell density), and 0.25 mm (10 mil) of a thickness of a cell wall.

### (Evaluation of firing jig)

### (1. Measurement of surface roughness)

Based on JIS B 0601 (2001), an arithmetic average height (surface roughness) Ra was measured by scanning the placing face of the firing jig in a horizontal direction with a surface texture and contour measuring instrument (SURFCOM E-MD-S39A, manufactured by TOKYO SEIMITSU CO., LTD.) under the following conditions: 0.3 mm/s of a trace speed; 2.5 mm of a cut-off; 2.5 mm of a reference length; and 500 times a longitudinal magnification.

### (2. Measurement of thickness of SiC coat layer)

The thickness of the SiC coat layer was measured with an electric conduction-type film thickness measuring apparatus.

### (3. Presence or absence of crack and peeling of SiC coat layer)

Presence or absence of cracks in the SiC coat layer was evaluated by visually observing the surface of the firing jig with a magnifying lens (5 times magnification) after the firing jig was allowed to pass through (once) the firing furnace controlled to have the same conditions as those for firing the honeycomb molded body (at a temperature of 2200°C for three hours under a normal-pressure argon atmosphere).
Also, presence or absence of peelings of the SiC coat layer was evaluated by visually observing the surface of the firing jig with a magnifying lens (5 times magnification) after the firing jig was allowed to pass through the firing furnace 10 times, in the same way as in the evaluation of presence or absence of cracks.

### (4. Presence or absence of irregularities on SiC coat layer)

Presence or absence of large apparent irregularities on the SiC coat layer was evaluated as follows: the firing jig was allowed to pass through the firing furnace controlled to have the same conditions as those for firing the honeycomb molded body (at a temperature of 2200°C for three hours under a normal-pressure argon atmosphere) 10 times; a placing face of the firing jig after passing through was made to contact with a surface plate; and distance between the placing face and the surface plate was measured with a vernier caliper. In the case that the maximum value of the distance was 2.0 mm or more, it was judged that the irregularities occurred on the coat layer. The irregularities are, so called, a warpage and a deformation, and the irregularities include the warpage and the deformation having a shape of a projection, a recess, a wave, and the like.

### (5. Evaluation of time for stabilization of average pore diameter)

After firing jigs were manufactured in Examples 1 and 2, and Comparative Example 1, time for stabilization of a pore diameter of each of the honeycomb fired bodies manufactured by using the firing jigs were evaluated. A target average pore diameter was set to 10 µm, and in the case that the measured average pore diameter was in a range of ±2 µm of the set value, it was judged that the pore diameter was stabilized.

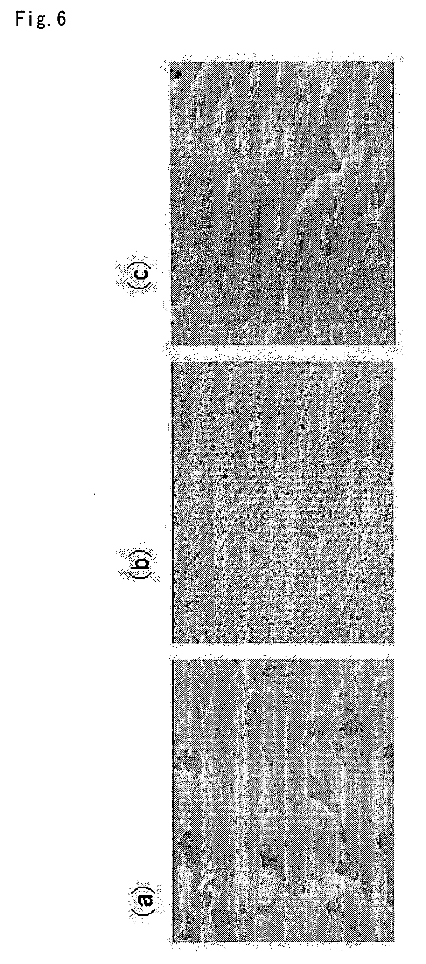

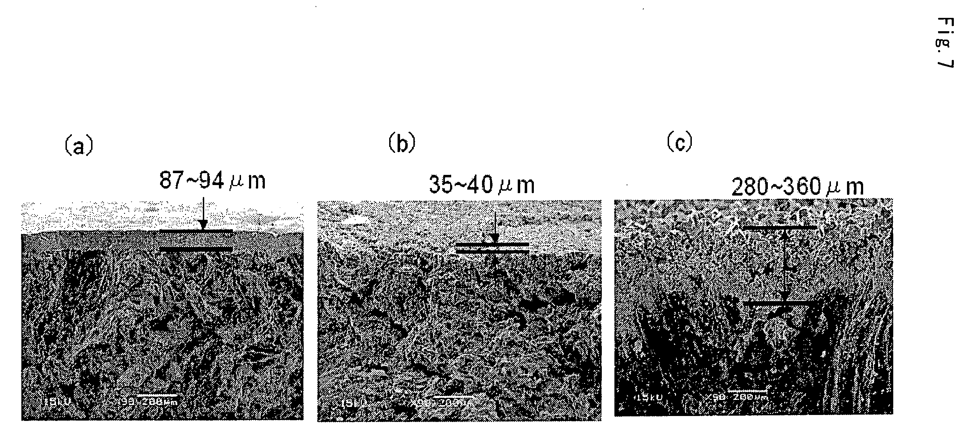

Also, in conformity with JIS R 1655, an average pore diameter was calculated as follows: the center portion of each of five pieces of honeycomb fired bodies were cut out into a cube having 1 cm width so as to be a sample; fine-pore distribution was measured in a range of 0.2 to 500 µm of a pore diameter with a fine-pore distribution measuring apparatus (AUTOPORE III 9405, manufactured by Shimadzu Corp.) which adopts a mercury penetration method; and the measured average fine-pore diameter (that is, the average pore diameter) was calculated as (4V/A).
Results of the evaluations are shown in Table 1, and SEM photographs (150 times magnification) of the surface of the SiC coat layer of each of the firing jigs manufactured in Examples 1 and 2, and Comparative Example 1 are shown in Figs. 6(a) to 6(c). Also, SEM photographs (90 times magnification) of the cross section of the SiC coat layer of each of the firing jigs manufactured in Examples 1 and 2, and Comparative Example 1 are shown in Figs. 7(a) to 7(c).

**[Table 1]**

| | Surface roughness (µm) | Thickness of SiC coat layer (µm) | Crack | Peeling | Irregularities on coat layer | Time for stabilization of average pore diameter |
|---|---|---|---|---|---|---|
| Example 1 | 4.5 | 87 to 94 | Absence | Absence | Absence | Stabilized just after manufacturing |
| Example 2 | 8.9 | 35 to 40 | Presence | Absence | Absence | 2 weeks |
| Comparative Example 1 | 26.3 | 280 to 360 | Presence | Presence | Presence | 1 month |

In the firing jig manufactured in Example 1, the dense SiC coat layer having 4.5 µm of the surface roughness and 87 to 94 µm of the thickness of the SiC coat layer was formed. Also, peelings, cracks, and irregularities were not present on the SiC coat layer, and with respect to the stabilization of the average pore diameter of the honeycomb fired body, the stable value was obtained just after the manufacturing. In the firing jig manufactured in Example 2, the surface roughness of the SiC layer was 8.9 µm, and peelings and irregularities were not present on the SiC coat layer, so that it can be used without any problems; however, cracks were present in the SiC coat layer. This is presumably because the surface roughness was 8.9 µm and the surface of the SiC coat layer was a little coarser in Example 2 than that in Example 1 in which the surface roughness was 4.5 µm and the SiC coat layer was dense, so that slight thermal stress was generated on the uppermost portion of the surface of the SiC coat layer and the thermal stress presumably caused the cracks. Here, although the cracks occurred in the SiC coat layer of the firing jig manufactured in Example 2, the cracks were not developed to cause peelings, and thus it is possible to use the firing jig without influencing on properties of the honeycomb fired body.

On the other hand, in the firing jig manufactured in Comparative Example 1, the surface roughness of the SiC coat layer was 26.3 µm, cracks and peelings were present, and irregularities were also present on the SiC coat layer. Since the surface roughness was as large as 26.3 µm, it is presumed that slight thermal stress was generated on the surface of the SiC coat layer as in Example 2, and the thermal stress caused the cracks, and further the cracks developed due to heat to cause the peelings. In addition, in Comparative Example 1, since it was required to allow the bottom base and the frame base to repeatedly pass through the firing furnace so as to form the SiC coat layer, the irregularities presumably occurred under the influences of forming nonuniformity in recrystallization and a thermal history upon forming the SiC coat layer.

Results of Examples 1 and 2, and Comparative Example 1 show that a surface roughness of a SiC coat layer is desirably 10 µm or less, and further desirably 5 µm or less in view of durability, exchange frequency, and the like. Also, with respect to the stabilization of the average pore diameter of the honeycomb fired body, the firing jig manufactured in Example 1 showed the stable value just after manufacturing, whereas the firing jig manufactured in Example 2 showed the stable value after two weeks. On the other hand, the firing jig manufactured in Comparative Example 1 took one month before the stabilization of the average pore diameter. The above-mentioned description shows that the firing jigs manufactured in Examples 1 and 2 are superior to that in Comparative Example 1 in view of the stabilization of the average pore diameter of the honeycomb fired body.

### (Second embodiment)

Next, the following description will discuss a second embodiment that is one embodiment of the present invention.
In the second embodiment, a SiC coat layer is formed by using a forming material of the SiC coat layer, and then, a surface of the SiC coat layer is ground to obtain a SiC coat layer having a predetermined surface roughness. The embodiment of this kind is also included in the present invention. Hereinafter, methods (A) to (D) for forming the SiC coat layer will be listed, and the following description will briefly discuss a method for grinding the formed SiC coat layer.

### (Formation of SiC coat layer)

(A) A polymer mainly containing hydridopolycarbosilane and the like is applied to an area where a SiC coat layer is to be formed on the firing jig, and thereafter, a drying treatment and a firing treatment are carried out to form the SiC coat layer.
Examples of a method for applying the polymer include spray coating, wash coating, brush application, instillation, printing, and the like.

In the case of using the method (A), presumably, a reaction shown in the following chemical reaction equation (4) proceeds to form the SiC coat layer on the firing jig. Here, in this method, the thickness of the firing jig is increased by the thickness of the formed SiC coat layer.

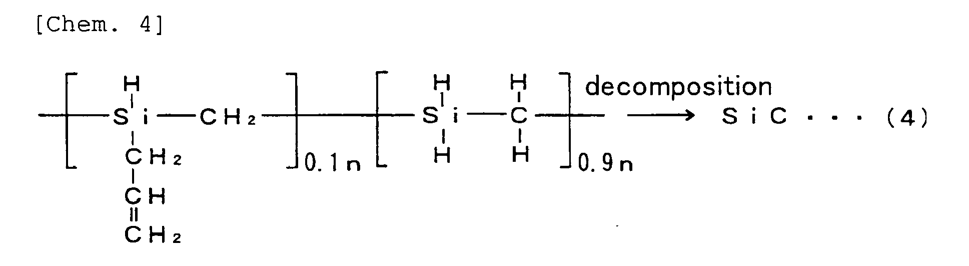

(B) A mixture containing SiC particles and SiO₂ particles is applied to or placed on an area where a SiC coat layer is to be formed on the firing jig, and then a drying treatment and a firing treatment are carried out to form the SiC coat layer. The same application methods as those in the method (A) can be used for applying the mixture.

In the case that the mixture containing the SiC particles and the SiO₂ particles is applied or placed, organic solvents may be added to the mixture so as to easily apply or place the mixture. Examples of the organic solvents include methyl cellulose, carboxymethyl cellulose, hydroxyethyl cellulose, polyethylene glycol, benzene, alcohols such as methanol, and the like.

In the case of using the method (B), presumably, reactions shown in the following chemical reaction equations (5) and (6) proceed to the right side to form the SiC layer on the firing jig. Here, in this method, since the SiC layer is formed by the reaction with carbon forming the firing jig, the thickness of the firing jig is hardly changed.

[Chem. 5] 2SiO₂+Si C ⇆ 3SiO+CO (5)

[Chem. 6] SiO+2C⇆SiC+CO (6)

(C) A firing treatment is carried out in a state that a material for recrystallization containing SiC particles and SiO₂ particles is placed on the firing jig, with inside of the firing furnace being under an atmosphere of SiO gas and CO gas, to form a coat layer comprising a recrystallized SiC on the surface of the firing jig.

In the case that the coat layer comprising the recrystallized SiC is formed, it may be acceptable to form the coat layer comprising the recrystallized SiC on the surface of the firing jig by using the same method as the above-mentioned method, except that a material for recrystallization containing SiC particles with SiO₂ film formed on the surface of the particles is used in place of the material for recrystallization containing the SiC particles and the SiO₂ particles.

In the case that the layer comprising the recrystallized SiC is formed by carrying out the firing treatment by using the material for recrystallization, the firing treatment may be carried out at a temperature of 1400 to 2300°C. Also, a drying treatment and a degreasing treatment (200 to 500°C) may be carried out on the material for recrystallization before the firing treatment.

In the case of using the method (C), SiC derived from the material for recrystallization adheres to the surface of the firing jig as a recrystallized SiC in the firing treatment, so that the coat layer comprising the recrystallized SiC is formed.

(D) A mixture containing Si (silicon) and C (carbon) is applied to or placed on an area where a SiC coat layer is to be formed on the firing jig, and thereafter, for example, a firing treatment is carried out at a temperature of about 1800°C to form the coat layer comprising a reaction-sintered SiC.
In the case of using the method (D), the SiC coat layer is formed on the surface of the firing jig by reaction sintering, so that the layer comprising the reaction-sintered SiC is formed.

### (Grinding of SiC coat layer)

Examples of a method for grinding the SiC coat layer thus formed include a grinding with a buff or a grindstone, a grinding with a sheet, a scrub grinding, a blast grinding, a blast treatment, a polishing, and the like.
Examples of the buff used in the grinding with a buff include: an abrasive grain-containing buff such as a disc buff, a flap buff, and a spiral buff; an abrasive grain-free buff such as a nonwoven polypropylene cloth; and the like. Examples of the abrasive grain used in the abrasive grain-containing buff include aluminum silicate, aluminum oxide, silicon carbide, and the like.

Examples of the grindstone include a resinoid grindstone (resin type), magnesia grindstone (cement type), diamond grindstone, resin-bonded diamond grindstone, rubber control grindstone, epoxy control grindstone, and the like.
Also, a sheet containing an abrasive having a particle size of # A60 to A240 can be used as the sheet, and specific examples thereof include a urethane sponge, a nonwoven nylon cloth, a sheet formed by adhering abrasive grains such as aluminum silicate, aluminum oxide, and silicon carbide to acryl (sponge) and the like.

Examples of the scrub grinding include a jet-scrub grinding, brush-scrub grinding, and the like.
Also, examples of the blast grinding include micro-blast grinding, sand-blast grinding, and the like.

Hereinafter, Examples that disclose the second embodiment of the present invention more specifically are shown, but the present invention is not limited to these Examples.

### (Example 3)

A box-shaped housing body with its upper face open comprising carbon (DSG-332, manufactured by SEC Corp.), which comprises a bottom base and a frame base, was prepared, and a polymer for forming a SiC coat layer mainly containing allyl hydridopolycarbosilane (SP-MATRIX Polymer, manufactured by Starfire-Systems, Inc.) was applied to a placing face of the bottom base for a honeycomb molded body and a surface of the frame base. Thereafter the housing body was dried at a temperature of 100°C for 12 hours, and then the housing body was repeatedly fired at a temperature of 2200°C for 2.5 hours seven times to form the SiC coat layer on the placing face of the housing body. Then, the buff grinding with the disc buff was carried out on the placing face so as to adjust the surface roughness to 10 µm or less to form the SiC coat layer, so that a firing jig was manufactured.

### (Example 4)

The SiC coat layer of the firing jig manufactured in Comparative Example 1 was buff-ground so as to adjust the surface roughness to 10 µm or less in the same manner as in Example 3, so that a firing jig was manufactured.

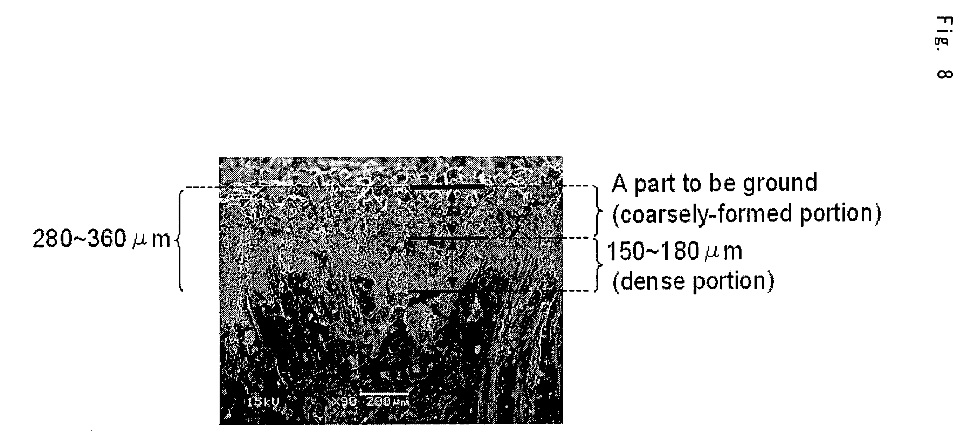

Fig. 8 is a SEM photograph showing a cross section of the firing jig before grinding.

### (Comparative Example 2)

A firing jig was manufactured in the same manner as in the Example 3 except that the buff grinding was not carried out.

### (Manufacture of honeycomb fired body)

Honeycomb fired bodies were manufactured by use of each of the firing jigs manufactured in Examples 3 and 4, and Comparative Example 2, in the same manner as in the method in which the honeycomb fired body was manufactured in the first embodiment.

### (Evaluation of firing jig)

Each of the firing jigs manufactured in Examples 3 and 4, and Comparative Example 2 was evaluated with regard to the points evaluated in the first embodiment.
The results are shown in Table 2.

**[Table 2]**

| | Surface roughness (µm) | Thickness of SiC coat layer (µm) | Crack | Peeling | Irregularities on coat layer | Time for stabilization of average pore diameter |
|---|---|---|---|---|---|---|
| Example 3 | 9.5 | * 280 to 360 → 150 to 180 | Absence | Absence | Absence | 1 month |
| Example 4 | 6.6 | * 280 to 360 →150 to 180 | Absence | Absence | Absence | 1 month |
| Comparative Example 2 | 28.1 | 220 to 320 | Presence | Presence | Presence | 1 month |

| | | | | | | |
|---|---|---|---|---|---|---|
| (*A SiC layer having a thickness of the SiC coat layer of the upper value was ground to have that of the lower value) | | | | | | |

In Example 3, the surface roughness of the SiC coat layer before the grinding was 27.5 µm and the surface roughness of the SiC coat layer after the grinding was 9.5 µm. Also, in Example 4, the surface roughness of the SiC coat layer before the grinding was 26.3 µm and the surface roughness of the SiC coat layer after the grinding was 6.6 µm. In both of Examples 3 and 4, peelings, cracks, and irregularities were not present on the coat layer, and the average pore diameter was stabilized in a month.
On the other hand, in Comparative Example 2, the surface roughness of the SiC coat layer was as large as 28.1 µm. Also, cracks and peelings were present on the SiC coat layer. The average pore diameter was stabilized in a month as the same as in Example 3, but irregularities were present on the SiC coat layer. This is presumably because the unevenness of the coat layer was caused by that the polymer for forming a SiC coat layer was not uniformly applied to the surface of the housing body and that the application, drying, and firing of the polymer for forming a SiC coat layer were repeatedly carried out so as to form the SiC coat layer.

The SiC coat layers before the grinding in Examples 3 and 4 were coarsely formed in the vicinity of the surface, and densely formed inside. Cracks tend to occur at a coarsely-formed surface portion of the SiC coat layer; however in Examples 3 and 4, since the coarsely-formed surface portion was ground so as to allow the dense portion formed at the inside to be exposed on the surface, it is possible to prevent peelings, cracks and the like from occurring after the grinding. Also, even in the case that irregularities are present on the surface of the SiC coat layer before the grinding, the irregularities are to be ground, so that it is possible to flatten the surface of the SiC coat layer.

### (Other embodiments)

Examples of the method for forming a SiC coat layer include a chemical vapor-phase method such as a CVD (Chemical Vapor Deposition) method, a CVT (Chemical Vapor Transportation) method, and a CVI (Chemical Vapor Infiltration) method, a PVD (Physical Vapor Deposition) method, a liquid-phase method such as a liquid-phase epitaxy method, a sol-gel method, a DLC (Diamond Like Carbon) coating method, and a spraying method, a solid-phase method such as a solid-phase epitaxy method, and a recrystallization method, and the like.

Among the methods for forming a SiC coat layer, the CVD method, the CVI method, the DLC coating method, the spraying method, and the recrystallization method are desirable, and particularly the CVD method and the CVI method are desirable.
This is because the CVD method and the CVI method can make the surface roughness of the SiC coat layer small. Also, although the DLC coating method, the spraying method, and the recrystallization method tend to make the surface roughness of the SiC coat layer large, it is possible to make the surface roughness of the SiC coat layer small by forming the thick SiC coat layer and grinding the surface thereof.
For example, in the case that the SiC coat layer is formed by the vapor-phase method, a method in which a heating treatment is carried out at a temperature of about 1000°C in the presence of CH₃SiCl₃ and H₂, and a method in which a heating treatment is carried out at a temperature of 1500 to 1800°C in the presence of SiCl₄ and C₆H₅CH₃ can be used.

A material of the spacer is not particularly limited as long as it can endure high temperatures upon firing, and silicon carbide, aluminum nitride, silicon nitride and the like can be used in addition to carbon.

The shape of the spacer is not particularly limited, and a carbon felt having a cloth shape formed by combining carbon fibers, and a spacer having a shape formed by putting string-shaped carbon fibers together are desirable. This is because these shapes are not so hard that a honeycomb molded body tends not to be damaged.

A honeycomb structured body manufactured in the present invention is not limited to a honeycomb structured body with a predetermined cell sealed. The honeycomb structured body with a predetermined cell sealed can be favorably used as a honeycomb filter, and the cell-unsealed honeycomb structured body can be favorably used as a catalyst supporting carrier.
Therefore, the plug material paste is not necessarily filled into the cells and may be filled as needed in the method for manufacturing a honeycomb structured body of the present invention.

The main component of the constituent material of the honeycomb structured body is not limited to silicon carbide, and examples of other ceramic materials include inorganic powders comprising the following materials: nitride ceramics such as aluminum nitride, silicon nitride, boron nitride, titanium nitride, and the like; carbide ceramics such as zirconium carbide, titanium carbide, tantalum carbide, tungsten carbide, and the like; oxide ceramics such as alumina, zirconia, cordierite, mullite, aluminum titanate, and the like.
Non-oxide ceramics are desirable among these, and silicon carbide is particularly desirable due to its superior heat-resistance, mechanical strength, heat conductivity, and the like. Here, examples of the constituent materials further include ceramic materials such as silicon-containing ceramics which are prepared by mixing the above-mentioned ceramics with metal silicon, and ceramics which are bonded by silicon or silicate composites, and the composite in which the metal silicon is mixed with silicon carbide (silicon-containing silicon carbide) is desirable among these.

Also, particle diameters of the silicon carbide powder is not particularly limited, and the silicon carbide powder that tends not to cause the case that the size of the honeycomb structured body manufactured by the following firing treatment becomes smaller than that of the honeycomb molded body after degreased is desirable. For example, a powder containing 100 parts by weight of a powder having an average particle diameter of 1.0 to 50 µm and 5 to 65 parts by weight of a powder having an average particle diameter of 0.1 to 1.0 µm is desirable.
It is required to adjust a firing temperature in order to adjust a pore diameter and the like of the honeycomb fired body; however, it is possible to adjust the pore diameter by adjusting the particle diameter of the inorganic powder.

An organic binder in the wet mixture is not particularly limited, and examples thereof include methyl cellulose, carboxymethyl cellulose, hydroxyethyl cellulose, polyethylene glycol, and the like. Methyl cellulose is desirable among these. Generally, a blending amount of the organic binder is desirably 1 to 10 parts by weight to 100 parts by weight of the inorganic powder.

The plasticizer in the wet mixture is not particularly limited, and examples thereof include glycerin and the like. Also, the lubricant is not particularly limited, and examples thereof include polyoxy alkylene series composites such as polyoxyethylene alkyl ether, polyoxypropylene alkyl ether, and the like.
Specific examples of the lubricant include polyoxyethylene monobutyl ether, polyoxypropylene monobutyl ether, and the like.
Here, in some cases, the plasticizer and the lubricant may not be necessarily included in the mixed material powder.

Also, a dispersant solution may be used upon preparing the wet mixture, and examples thereof include water, organic solvents such as benzene, and alcohols such as methanol, and the like.
Moreover, a forming auxiliary may be added into the wet mixture.
The forming auxiliary is not particularly limited, and examples thereof include ethylene glycol, dextrin, fatty acid, fatty acid soap, polyalcohol, and the like.

Furthermore, if necessary, balloons that are fine hollow spheres comprising oxide-based ceramics, spherical acrylic particles, graphite and the like may be added to the wet mixture as a pore-forming agent.
The balloons are not particularly limited, and examples thereof include alumina balloons, glass micro balloons, shirasu balloons, fly ash balloons (FA balloons), mullite balloons, and the like. Alumina balloons are desirable among these.

Also, a temperature of the wet mixture containing a silicon carbide powder is desirably 28°C or less. In the case that the temperature is too high, the organic binder tends to be gelatinized.
Also, the proportion of organic contents in the wet mixture is desirably 10% by weight or less, and the content of moisture is desirably 8 to 20% by weight.

The plug material paste used for sealing the cells are not particularly limited, and those plug material pastes that allow the plugs manufactured through the following treatments to have a porosity of 30 to 75% are desirable, and for example, the same materials as those of the wet mixture can be used.

Moreover, upon forming the aggregated body of the honeycomb fired bodies, the honeycomb fired bodies are preliminarily piled up one after another by interposing spacers, and then a sealing material paste is filled between the honeycomb fired bodies, so that an aggregated body of the honeycomb fired bodies may be manufactured.

Examples of the inorganic binder used in the sealing material paste include silica sol, alumina sol, and the like. Each of these may be used alone or two or more kinds of these may be used in combination. Silica sol is desirable among the inorganic binders.

Examples of the organic binder used in the sealing material paste include polyvinyl alcohol, methyl cellulose, ethyl cellulose, carboxymethyl cellulose, and the like. Each of these may be used alone or two or more kinds of these may be used in combination. Carboxymethyl cellulose is desirable among the organic binders.

The examples of the inorganic fibers used in the sealing material paste include ceramic fibers such as silica-alumina fibers, mullite fibers, alumina fibers, and silica fibers. Each of these may be used alone or two or more kinds of these may be used in combination. Alumina fibers are desirable among the inorganic fibers.

The examples of the inorganic particles used in the sealing material paste include carbides, nitrides, and the like. Specific examples include an inorganic powder comprising silicon carbide, silicon nitride and boron nitride, and the like. Each of these may be used alone, or two or more kinds of these may be used in combination. Silicon carbide is desirable among the inorganic particles due to its superior heat conductivity.
Moreover, if necessary, the same pore-forming agent as that used in the wet mixture may be added into the sealing material paste.

After the honeycomb molded body was manufactured by extrusion-molding, the drying treatment is not necessarily carried out, and may be carried out if necessary. Also, the drying treatment may be carried out after the plug material paste was charged into end portions of the cells.
Also, upon drying the honeycomb molded body, a microwave drying apparatus, a hot-air drying apparatus, a reduced-pressure drying apparatus, a dielectric drying apparatus, a freeze drying apparatus, and the like may be used in addition to a drying apparatus in which microwave and hot air are used in combination.

Here, the degreasing treatment and the firing treatment are not necessarily carried out by using the same firing jig, and a degreasing jig which is not the same as the firing jig may be used upon degreasing. In this case, the degreased honeycomb molded body is taken from the degreasing jig and placed on the spacer which is placed in the firing jig, and then the firing treatment can be carried out.

A catalyst may be supported on the honeycomb structured body manufactured in the present invention if necessary. Also, the catalyst may be supported on the honeycomb fired body before a honeycomb aggregated body is manufactured.
In the case that the catalyst is supported, it is desirable that an alumina film having a large specific surface area is formed on the surface of the honeycomb structured body, and that a co-catalyst and the catalyst such as platinum are supported on a surface of the alumina film (layer).

### BRIEF DESCRIPTION OF THE DRAWINGS

Fig. 1 is a partial cross-sectional perspective view
schematically showing a firing jig of a first embodiment of the present invention.
Fig. 2 is a perspective view schematically showing a honeycomb molded body to be fired.
Fig. 3 is a perspective view schematically showing one example of a honeycomb structured body.
Fig. 4 (a) is a perspective view schematically showing a honeycomb fired body which forms a honeycomb structured body, and Fig. 4(b) is an A-A line cross-sectional view of the honeycomb fired body.
Fig. 5 is a partially enlarged front view showing a state that a honeycomb molded body is housed in a firing jig by interposing a spacer.
Fig. 6 (a) is a SEM photograph showing a surface of a SiC coat layer of a firing jig manufactured in Example 1, Fig. 6 (b) is an SEM photograph showing a surface of a SiC coat layer of a firing jig manufactured in Example 2, and Fig. 6(c) is a SEM photograph showing a surface of a SiC coat layer of a firing jig manufactured in Comparative Example 1.
Fig. 7 (a) is a SEM photograph showing a cross section of a firing jig manufactured in Example 1, Fig. 7(b) is a SEM photograph showing a cross section of a firing jig manufactured in Example 2, and Fig. 7 (c) is a SEM photograph showing a cross section of a firing jig manufactured in Comparative Example 1 .
Fig. 8 is a SEM photograph showing a cross section of a firing jig before grinding in Example 4.

### EXPLANATION OF SYMBOLS

- 10: Firing jig
- 11: Housing body
- 16: Coat layer
- 17: Placing face
- 20: Honeycomb molded body
- 21: Cell
- 22: Cell wall
- 24b: Side face
- 40.: Spacer
- 60: Honeycomb fired body

## Claims

1. A firing jig for a honeycomb molded body, comprising:
a housing body for placing a pillar-shaped honeycomb molded body including silicon carbide as a main component with a side face of the honeycomb molded body facing down; and
a coat layer formed on at least a placing face of said housing body for placing said honeycomb molded body thereon,
wherein
a main component of said coat layer includes silicon carbide,
said coat layer having an arithmetic average height Ra of 10 µm or less obtained in conformity with JIS B 0601 (2001).

2. The firing jig according to claim 1,
wherein
said coat layer is a dense layer formed by a vapor-phase method.

3. The firing jig according to claim 2,
wherein
said vapor-phase method is a chemical vapor infiltration method.

4. The firing jig according to any of claims 1 to 3,
wherein
said coat layer is formed on the entire surface of said housing body.

5. The firing jig according to claim 1 or 4,
wherein
said coat layer is formed by grinding a SiC coat layer comprising a forming material of the SiC coat layer.

6. The firing jig according to claim 5,
wherein
said forming material of the SiC coat layer is a polymer mainly containing hydridopolycarbosilane, a mixture containing SiC particles and SiO₂ particles, a material containing SiC particles with SiO₂ film formed on a surface of the particles, or a mixture containing Si and C.

7. The firing jig according to any of claims 1, 4, 5, and 6,
wherein
said coat layer comprises a recrystallized SiC or a reaction-sintered SiC.

8. A method for manufacturing a honeycomb structured body formed by a honeycomb fired body, comprising:
molding a ceramic material including silicon carbide as a main component to manufacture a pillar-shaped honeycomb molded body having a large number of cells disposed in a longitudinal direction with a cell wall therebetween;
degreasing said honeycomb molded body; and
firing the degreased honeycomb molded body to manufacture the honeycomb fired body,
wherein
said honeycomb molded body is fired in a state that said honeycomb molded body is placed in a firing jig,
said firing jig comprising:
a housing body for placing said honeycomb molded body with a side face of the honeycomb molded body facing down; and
a coat layer formed on at least a placing face of said housing body for placing said honeycomb molded body thereon, and
a main component of said coat layer is silicon carbide,
said coat layer having an arithmetic average height Ra of 10 µm or less obtained in conformity with JIS B 0601 (2001) .

9. The method for manufacturing a honeycomb structured body according to claim 8,
wherein
said coat layer is a dense layer formed by a vapor-phase method.

10. The method for manufacturing a honeycomb structured body according to claim 9,
wherein
said vapor-phase method is a chemical vapor infiltration method.

11. The method for manufacturing a honeycomb structured body according to any of claims 8 to 10,
wherein
said coat layer is formed on the entire surface of said housing body.

12. The method for manufacturing a honeycomb structured body according to any of claims 8 to 11,
wherein
said honeycomb molded body is placed in said firing jig by interposing a spacer comprising carbon.

13. The method for manufacturing a honeycomb structured body according to any of claims 8 to 12, further comprising:
degreasing said honeycomb molded body by use of said firing jig, while said honeycomb molded body is placed in said firing jig; and
firing said honeycomb molded body, while the degreased honeycomb molded body is placed in said firing jig.

14. The method for manufacturing a honeycomb structured body according to any of claims 8, 11, 12, and 13,
wherein
said coat layer is formed by grinding a SiC coat layer comprising a forming material of the SiC coat layer.

15. The method for manufacturing a honeycomb structured body according to claim 14,
wherein
said forming material of the SiC coat layer is a polymer mainly containing hydridopolycarbosilane, a mixture containing SiC particles and SiO₂ particles, a material containing SiC particles with SiO₂ film formed on a surface of the particles, or a mixture containing Si and C.

16. The method for manufacturing a honeycomb structured body according to any of claims 8, 11, 12, 13, 14, and 15,
wherein
said coat layer comprises a recrystallized SiC or a reaction-sintered SiC.
